# EUROPEAN PATENT APPLICATION

(11) **EP 4 198 769 A1**
(43) Date of publication of application: **21.06.2023**
(21) Application number: 22214933.8
(22) Date of filing: 20.12.2022
(51) Int. Cl.: G06F 16/738

(54) **VIDEO GENERATION METHOD AND APPARATUS, ELECTRONIC DEVICE, NON-TRANSITORY COMPUTER-READABLE STORAGE MEDIUM, AND COMPUTER PROGRAM PRODUCT**

(30) Priority: 20.12.2021 CN 202111566308
(71) Applicant: Beijing Baidu Netcom Science Technology Co., Ltd., Beijing 100085 (CN)
(72) Inventor: BIAN, Donghai, Beijing (CN); WU, Yuwei, Beijing (CN); SHENG, Guangzhi, Beijing (CN); ZHENG, Yehan, Beijing (CN); PENG, Weihua, Beijing (CN); XU, Weijian, Beijing (CN)
(74) Representative: Carangelo, Pierluigi

(57) **Abstract**

Provided are a video generation method and apparatus, an electronic device, a non-transitory computer-readable storage medium, and a computer program product, which relates to the field of artificial intelligence technologies, particularly, the field of deep learning and knowledge graph technologies. The implementation scheme is as follows: a place path of at least two target events is planned (S101) in an electronic map according to occurrence places of the at least two target events and occurrence time of the at least two target events, where the at least two target events have a same theme; video sub-segments of the at least two target events are respectively determined (S102) to obtain at least two video sub-segments; and a target video is generated (S103) according to the at least two video sub-segments and the place path.

## Description

### TECHNICAL FIELD

The present disclosure relates to the field of artificial intelligence technologies, particularly, the field of deep learning and knowledge graph technologies, and specifically, a video generation method and apparatus, an electronic device, a non-transitory computer-readable storage medium, and a computer program product.

### BACKGROUND

At present, people are increasingly concerned about major events such as epidemic situations and tsunamis, so how to show these events to people is important for people to understand these events.

### SUMMARY

The present disclosure provides a video generation method and apparatus, an electronic device, a non-transitory computer-readable storage medium, and a computer program product.

According to an embodiment of the present disclosure, a video generation method is provided. The method includes that: a place path of at least two target events is planned in an electronic map according to occurrence places of the at least two target events and occurrence time of the at least two target events, where the at least two target events have a same theme; video sub-segments of the at least two target events are respectively determined to obtain at least two video sub-segments; and a target video is generated according to the at least two video sub-segments and the place path.

According to an embodiment of the present disclosure, a video generation apparatus is provided. The apparatus includes a place path planning module, a video sub-segment determination module and a target video generation module. The place path planning module is configured to plan a place path of at least two target events in an electronic map according to occurrence places of the at least two target events and occurrence time of the at least two target events, where the at least two target events have a same theme. The video sub-segment determination module is configured to determine video sub-segments of the at least two target events respectively to obtain at least two video sub-segments. The target video generation module is configured to generate a target video according to the at least two video sub-segments and the place path.

According to an embodiment of the present disclosure, an electronic device is provided. The electronic device includes at least one processor and a memory communicatively connected to the at least one processor. The memory stores an instruction executable by the at least one processor, and the instruction, when executed by the at least one processor, causes the at least one processor to perform the video generation method described in any one of the embodiments of the present disclosure.

According to an embodiment of the present disclosure, a non-transitory computer-readable storage medium storing a computer instruction is provided. The computer instruction is configured to cause a computer to perform the video generation method described in any one of the embodiments of the present disclosure.

According to an embodiment of the present disclosure, a computer program product is provided. The computer program product comprises a computer program, where the computer program, when executed by a processor, implements the video generation method described in any one of the embodiments of the present disclosure.

According to the technology of the present disclosure, different events with related themes may be reasonably and fully introduced.

It should be understood that the contents described in this section are not intended to identify key or critical features of the embodiments of the present disclosure, nor intended to limit the scope of the present disclosure. Other features of the present disclosure will be readily understood from the following description.

### BRIEF DESCRIPTION OF DRAWINGS

The drawings are intended to provide a better understanding of this scheme and are not to be construed as limiting the present disclosure;
FIG. 1 is a flowchart of a video generation method according to an embodiment of the present disclosure;
FIG. 2 is a flowchart of another video generation method according to an embodiment of the present disclosure;
FIG. 3 is a flowchart of another video generation method according to an embodiment of the present disclosure;
FIG. 4 is a flowchart of another video generation method according to an embodiment of the present disclosure;
FIG. 5 is a schematic structural diagram of a video generation apparatus according to an embodiment of the present disclosure; and
FIG. 6 is a block diagram of an electronic device for implementing a video generation method of embodiments of the present disclosure.

### DETAILED DESCRIPTION

Exemplary embodiments of the present disclosure are described below with reference to the accompanying drawings, in which various details of embodiments of the present disclosure are included to assist understanding, and which are to be considered as merely exemplary. Therefore, those of ordinary skill in the art will recognize that various changes and modifications of the embodiments described herein may be made without departing from the scope and spirit of the present disclosure. Also, descriptions of well-known functions and structures are omitted in the following description for clarity and conciseness.

In recent years, with the development of the Internet, people may know various events through the network, and especially pay more and more attention to sudden events such as epidemic situations, tsunamis, satellites and other related events.

At present, in the related news reports concerned by people, only text versions are contained or only the passing of things from the time perspective is introduced, so it is difficult for the readers to have visual feelings. Based on this, the present disclosure provides a video generation method for introducing an event.

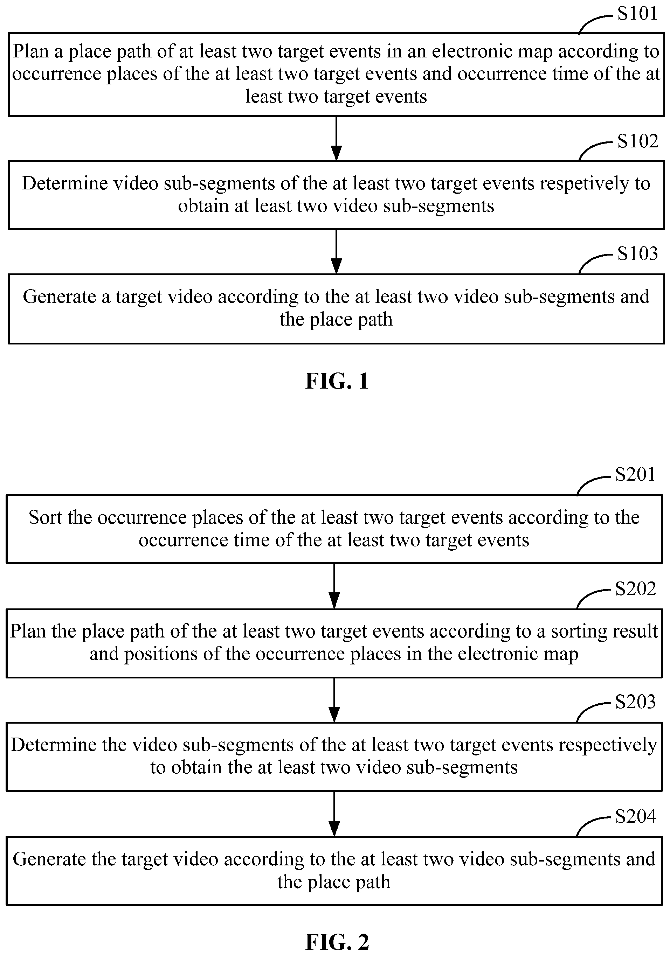

FIG. 1 is a flowchart of a video generation method according to an embodiment of the present disclosure. This method is applicable to a case of how to introduce events, and is particularly applicable to a case of how to introduce the events based on a video form. This method may be executed by a video generation apparatus, this apparatus may be implemented in a software and/or hardware manner, and may be integrated into an electronic device carrying a video generation function. As shown in FIG. 1, the video generation method of this embodiment may include the following.

In S101, a place path of at least two target events is planned in an electronic map according to occurrence places of the at least two target events and occurrence time of the at least two target events.

In this embodiment, the target event refers to an event that is of great public concern, and may be a hotspot event or a sudden event, such as epidemic situations, typhoons and landing satellites. Further, each target event has one occurrence place and occurrence time.

Optionally, the target event may be acquired in a variety of ways, which is not limited in this embodiment. For example, at least two target events may be grabbed from a pre-built event library. The at least two target events have a same theme. Alternatively, events may be divided into groups in advance according to the themes of the events, and at least two target events with the same theme may be further acquired from any of the groups. Alternatively, the target events may be acquired from an event library or groups according to at least a number of events required to form one standard video.

Optionally, that any two events have the same theme is characterized that contents stated by the two events belong to a same theme. For example, both an event a and an event b state something related to a certain tsunami.

The place path refers to a path formed by the occurrence places of the at least two target events in the electronic map.

In an optional implementation, an event sequence of the at least two target events may be determined according to the occurrence time of the at least two target events, and then a path between the occurrence places of the target events is planned in the electronic map according to the event sequence. The event sequence may express an occurrence sequence among the target events.

In another optional implementation, the occurrence places and the occurrence time of the at least two target events may be input into a path planning model, and the path planning model plans the place path of the at least two target events based on the electronic map.

In S102, video sub-segments of the at least two target events are respectively determined to obtain at least two video sub-segments.

In this embodiment, the video sub-segment refers to a video segment for introducing the target event.

In an optional implementation, for each target event, a video sub-segment of the target event may be generated based on a video generation model. Specifically, information related to the target event, such as the content related to the target event, may be input into the video generation model, and the video sub-segment of the target event is obtained through the processing of the video generation model.

In another optional implementation, for each target event, a video for introducing the target event may be acquired from a web page or other channels; and cutting and other processing are performed on the acquired video of the target event according to a rule for generating the standard video provided in this embodiment so as to obtain a video sub-segment of the target video.

In another optional implementation, for each target event, analysis processing is performed on the target event based on a rule for generating the standard video provided in this embodiment, for example, pictures, main content, and the like are extracted from the target event so as to obtain a video sub-segment of the target video.

In S103, a target video is generated according to the at least two video sub-segments and the place path.

In this embodiment, the target video refers to a video that ultimately enables a complete introduction to the event.

In an optional implementation, the at least two video sub-segments and the place path may be fused based on a video generation engine to obtain the target video.

In another optional implementation, the at least two video sub-segments may be spliced according to the occurrence time of the target events, and then the target video is generated in conjunction with the place path.

According to the technical schemes provided in the embodiments of the present disclosure, the place path of the at least two target events is planned in the electronic map according to the occurrence places and the occurrence time of the at least two target events with the same theme; then the video sub-segments of the at least two target events are respectively determined to obtain the at least two video sub-segments; and further, the target video is generated according to the at least two video sub-segments and the place path. In the above-described technical schemes, the place path is introduced by combining the electronic map and according to the occurrence places and the occurrence time of the events, and videos of multiple events with a same theme are generated, which is equivalent to providing a way to introduce related events in a video form from a spatial perspective, so that different events with related themes may be reasonably and fully introduced, and it is convenient for readers to understand the sequence of the events.

On the basis of the above embodiments, as an optional implementation of the present disclosure, the video sub-segments of the at least two target events being respectively determined may also be that: event attribute information of each target event of the at least two target events is extracted; and a video sub-segment of each target event is generated according to the event attribute information of the each target event.

The event attribute information refers to related attribute information of the target event, and may include, but is not limited to, an event abstract, an event name, an event character, occurrence time, an occurrence place, a picture or a video.

Specifically, for each target event, the event attribute information of the target event may be extracted based on an event extraction tool, and then the event attribute information of the target event may be fused based on the video generation model to obtain the video sub-segment of the target event.

It should be understood that the content of the video sub-segment may be enriched by introducing the event attribute information, so that events with related themes may be more reasonably and fully introduced.

On the basis of the above embodiments, as an optional implementation of the present disclosure, the target video may be played after the target video is generated. Specifically, in a playing process of the target video, the occurrence places in the place path are displayed in the form of a three-dimensional image; and meanwhile, in the playing process of the target video, the playing progress may be tracked in the form of a two-dimensional highlighted arrow so as to point to a next occurrence place in the place path.

It should be understood that in the video playing process, the occurrence places are displayed through the three-dimensional image so that the readers can feel an event more intuitively; and meanwhile, the next occurrence place is pointed in the form of a two-dimensional arrow so that the readers can intuitively and vividly know the event sequence.

FIG. 2 is a flowchart of another video generation method according to an embodiment of the present disclosure. In this embodiment, the step that "the place path of the at least two target events is planned in the electronic map according to the occurrence places of the at least two target events and the occurrence time of the at least two target events" is refined on the basis of the above-described embodiments, and an optional implementation scheme is provided. As shown in FIG. 2, the video generation method in this embodiment may include the following.

In S201, the occurrence places of the at least two target events are sorted according to the occurrence time of the at least two target events.

Specifically, the occurrence places of the at least two target events may be sorted based on a sorting model according to a sequence of the occurrence time of the at least two target events.

In S202, the place path of the at least two target events is planned according to a sorting result and positions of the occurrence places in the electronic map.

Specifically, based on the sorting result, for any two adjacent occurrence places, a target sub-path between the two adjacent occurrence places may be determined according to positions of the two adjacent occurrence places in the electronic map. Then, target sub-paths are spliced to obtain the place path of the at least two target events.

Further, that the target sub-path between the two occurrence places is determined may be as follows: if only one sub-path exists between the two occurrence places, then the sub-path is used as the target sub-path between the two occurrence places; if at least two sub-paths exist between the two occurrence places, then the target sub-path is determined according to a set strategy, for example, one sub-path is randomly selected as the target sub-path between the two adjacent occurrence places. In this embodiment, any path between two occurrence places may be used as one sub-path.

In S203, the video sub-segments of the at least two target events are respectively determined to obtain the at least two video sub-segments.

In S204, the target video is generated according to the at least two video sub-segments and the place path.

According to the technical scheme provided in the embodiment of the present disclosure, the occurrence places of the at least two target events are sorted according to the occurrence time of the at least two target events; the place path of the at least two target events is planned according to the sorting result and the positions of the occurrence places in the electronic map; then the video sub-segments of the at least two target events are respectively determined to obtain the at least two video sub-segments; and further, the target video is generated according to the at least two video sub-segments and the place path. In the above-described technical scheme, the place path is determined by sorting the occurrence places according to the occurrence time, so that the finally generated target video can intuitively express the event sequence among different events with the same theme.

On the basis of the above embodiments, as an optional implementation of the present disclosure, that the place path of the at least two target events is planned according to the sorting result and the positions of the occurrence places in the electronic map may be as follows: candidate place paths of the at least two target events are planned according to the sorting result and the positions of the occurrence places in the electronic map; and a target place path is selected from the candidate place paths according to description information of the at least two target events.

The candidate place paths refer to at least two place paths of the at least two target events. The target place path refers to a place path most closely associated with the at least two target events among the candidate place paths. The description information includes content information of the target events.

Specifically, for adjacent occurrence places, at least one sub-path between the adjacent occurrence places may be determined according to the sorting result and the positions of the occurrence places in the electronic map; and then, the sub-paths are spliced so as to obtain the candidate place paths of the at least two target events.

Further, the candidate place paths are screened according to venue information related to the path and involved in the description information of the at least two target events so as to determine the target place path.

For example, if at least two sub-paths exist between certain adjacent occurrence places and the description information of the target event corresponding to the occurrence place contains a certain shopping mall, a road where the certain shopping mall is located is used as a target sub-path between the adjacent occurrence places; a candidate place path including the target sub-path among the candidate place paths is used as a remaining place path; if only one remaining place path exists, then the remaining place path is directly used as the target place path, otherwise, one path may be selected from the remaining place paths to serve as the target place path in combination with other factors such as the visitor flowrate of the path.

Further, if at least two sub-paths exist between adjacent occurrence places, then target sub-paths between the two adjacent occurrence places are determined from the at least two sub-paths between the adjacent occurrence places according to the description information of the target events corresponding to the occurrence place and in combination with data such as infrastructures (such as shopping malls and hospitals) surrounding the at least two sub-paths and visitor flowrate of the at least two sub-paths, and the target sub-paths are spliced to obtain the target place path of the at least two target events.

It should be understood that the target place path of the target events can be more accurately determined by introducing the description information of the target events.

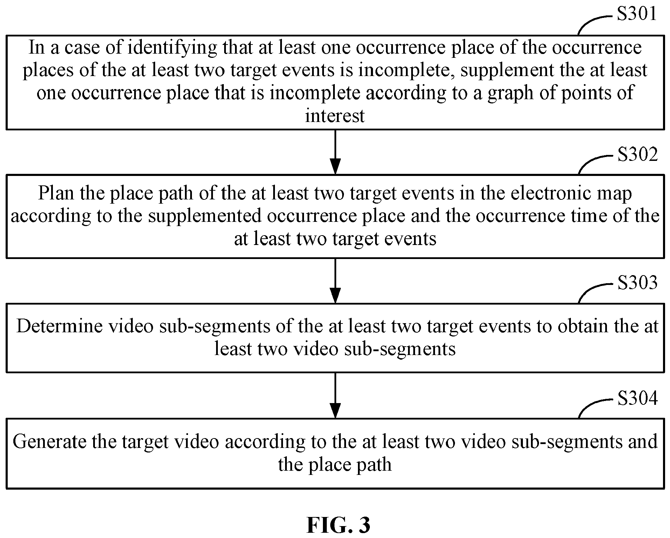

FIG. 3 is a flowchart of another video generation method according to an embodiment of the present disclosure. In this embodiment, the step that "the place path of the at least two target events is planned in the electronic map according to the occurrence places of the at least two target events and the occurrence time of the at least two target events" is refined on the basis of the above-described embodiments, and an optional implementation scheme is provided. As shown in FIG. 3, the video generation method in this embodiment may include the following.

In S301, in a case of identifying that at least one occurrence place of the occurrence places of the at least two target events is incomplete, the at least one occurrence place that is incomplete is supplemented according to a graph of points of interest.

In this embodiment, the incomplete place refers to an incomplete point of interest (POI) name and/or an incomplete POI address of the occurrence place of the target event. A graph of points of interest, namely a POI graph, may be a graph constructed based on POI data in the electronic map in advance.

Specifically, whether the incomplete place exists in the occurrence places of the at least two target events may be identified based on an incomplete place identification model, and if the incomplete place exists, the incomplete place in the occurrence places is supplemented according to the graph of the points of interest. For example, if the POI name of the occurrence place is incomplete, such as an airport of city A, then the "airport of city A " is supplemented according to the graph of the points of interest.

In S302, the place path of the at least two target events is planned in the electronic map according to the supplemented occurrence place and the occurrence time of the at least two target events.

In an optional implementation, the occurrence time of the at least two target events and the supplemented occurrence place may be input into a path planning model, and the path planning model plans the place path of the at least two target events based on the electronic map.

In another optional implementation, the supplemented occurrence places are sorted according to the occurrence time of the at least two target events, and then the place path of the at least two target events is planned according to the sorting result and positions of the supplemented occurrence places in the electronic map.

In S303, the video sub-segments of the at least two target events are respectively determined to obtain at least two video sub-segments.

In S304, the target video is generated according to the at least two video sub-segments and the place path.

According to the technical schemes provided in the embodiments of the present disclosure, in a case of identifying that at least one occurrence place of the occurrence places of the at least two target events is incomplete, the at least one occurrence place that is incomplete is supplemented according to the graph of points of interest; the place path of the at least two target events is planned in the electronic map according to the supplemented occurrence place and the occurrence time of the at least two target events; then the video sub-segments of the at least two target events are respectively determined to obtain the at least two video sub-segments; and further, the target video is generated according to the at least two video sub-segments and the place path. In the above-described technical schemes, the incomplete place is supplemented so that the place path of the target event can be more accurately determined, and a foundation is laid for the subsequent generation of the target video.

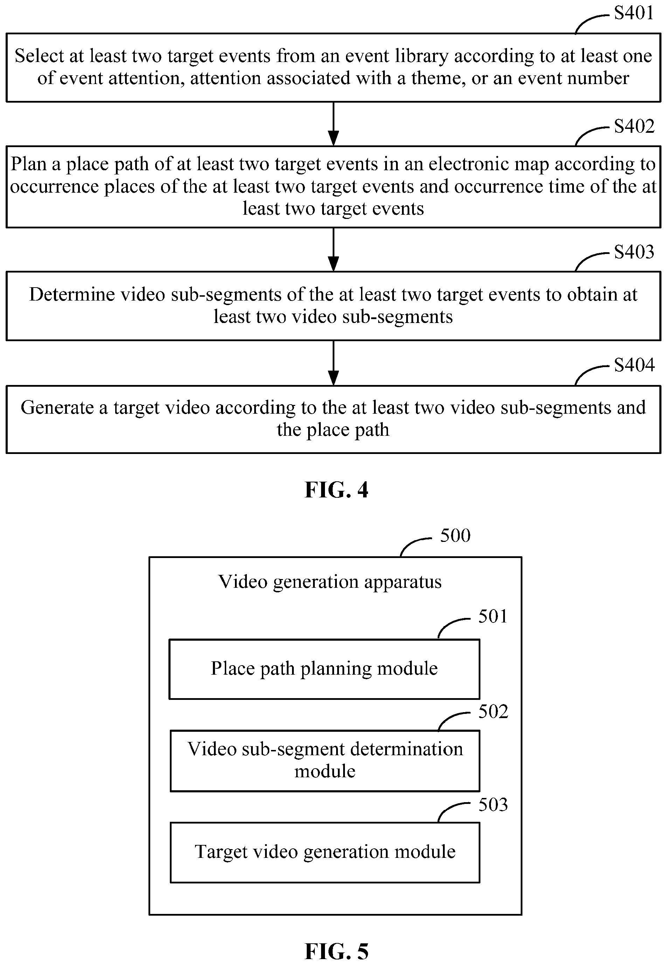

FIG. 4 is a flowchart of another video generation method according to an embodiment of the present disclosure. This embodiment is further refined on the basis of the above-described embodiments, and an optional scheme is provided. As shown in FIG. 4, the video generation method of this embodiment may include the following.

In S401, at least two target events are selected from an event library according to at least one of event attention, attention associated with the theme, or an event number.

In this embodiment, the event attention refers to an attention degree of the event itself, such as a click rate and a search rate of the event. The attention associated with the theme refers to an attention degree of the content related to the theme; optionally, the attention associated with the theme may be determined according to event attention of all events under the theme; and further, the attention associated with the theme may be determined by combining information related to the theme and acquired from other channels. Further, the attention associated with the theme may be directly acquired from a theme graph.

The event number may be a number of events under the same theme, and may be used for characterizing the degree of scarcity of the theme, or the degree of scarcity of events under the theme, and the like. For example, a number of events under a certain theme is small, which indicates that the theme is scarce, or that events of the theme are scarce.

The event library contains all events. In a case where the acquired news information is identified to be an event, the news information may be cleaned and then added to the event library. Optionally, events in the event library may be divided according to themes, and events with the same theme are stored together.

In an optional implementation, at least two target events may be selected from the event library according to the attention associated with the theme in the theme graph. For example, a theme with the attention associated with the theme in the theme graph that is greater than a set attention value may be used as a hot theme; events related to the hot theme in the event library are used as candidate events, and further, a type of events with the same theme are randomly selected from the candidate events as the target events. The set attention value may be set by those skilled in the art according to actual conditions.

A construction process of the theme graph is as follows: events in the event library are aggregated according to the theme of each event in the event library so as to obtain multiple categories; for each category, and a theme graph under the category is constructed according to an association relationship (such as the sequence of the occurrence time) between events under the category.

In another optional implementation, a set number of events with the same theme and the event attention higher than a set threshold may be selected from the event library to serve as the target events. For example, 100 events with the event attention higher than the set threshold are selected from the event library, and then events with the same theme are selected from the 100 events to serve as the target events. The set threshold may be determined by those skilled in the art according to actual conditions.

In another optional implementation, according to the number of events, all events under the most scarce theme may be selected from the event library to serve as the target events.

In another optional implementation, at least two target events may be selected from the event library in combination with at least two of the event attention, the attention associated with the theme, or the event number.

It should be noted that events for which the target video have been generated in the event library may be marked, and the marked events are excluded the next time the target events need to be determined.

In S402, a place path of the at least two target events is planned in an electronic map according to occurrence places of the at least two target events and occurrence time of the at least two target events.

The at least two target events have the same theme.

In S403, video sub-segments of the at least two target events are respectively determined to obtain at least two video sub-segments.

In S404, a target video is generated according to the at least two video sub-segments and the place path.

According to the technical schemes provided in the embodiment of the present disclosure, the at least two target events are selected from the event library according to the at least one of the event attention, the attention associated with the theme, or the event number; then the place path of the at least two target events is planned in the electronic map according to the occurrence places and the occurrence time of the at least two target events, where the at least target events have the same theme; further, video sub-segments of the at least two target events are respectively determined to obtain at least two video sub-segments; and the target video is generated according to the at least two video sub-segments and the place path. In the above-described technical schemes, the target events are determined through data of different dimensions, such as the event attention, the attention associated with the theme, and the event number, so that the determination of the target event may be more reasonable.

On the basis of the above embodiments, as an optional implementation of the present disclosure, that the at least two target events are selected from the event library according to the at least one of the event attention, the attention associated with the theme, or the event number may also be as follows: a to-be-processed event set is selected from the event library according to the at least one of the event attention, the attention associated with the theme or the event number; and at least two target events are selected from the to-be-processed event set according to an event content length of to-be-processed events in the to-be-processed event set and a standard video duration.

The to-be-processed event set refers to a candidate event set. The standard video duration refers to an optimal duration for generating a video. The event content length refers to a length of the event and the like.

Exemplarily, a set number of events with the same theme and the event attention higher than the set threshold may be selected from the event library to serve as the to-be-processed event set. Exemplarily, events under the theme with the highest attention associated with one theme may be selected from the event library to serve as the to-be-processed event set. Exemplarily, events under the most scarce theme may be selected from the event library according to the event number to serve as the to-be-processed event set. Further, the to-be-processed event set may be selected from the event library in combination with at least two of the event attention, the attention associated with the theme, or the event number.

A minimum selection number and a maximum selection number of the target events are determined according to the event content length of the to-be-processed events in the to-be-processed event set and the standard video duration, and further, a proper number of to-be-processed events are selected from the to-be-processed event set to serve as the target events. Further, to-be-processed events with a number of standard events may be selected from the to-be-processed event set to serve as the target events according to a number of the standard events required for forming one standard video.

It should be understood that the standard video duration and the event content length are introduced to determine the target events, so that the finally generated target video is more reasonable, and a situation that the target video is too long or too short is avoided.

On the basis of the above embodiments, as an optional implementation of the present disclosure, that the at least two target events are selected from the event library according to the at least one of the event attention, the attention associated with the theme, or the event number may also be as follows: a to-be-processed event set is selected from the event library according to at least one of the event attention, the attention associated with the theme or the event number; de-duplication processing is performed on the to-be-processed event set according to description information of to-be-processed events in the to-be-processed event set; and at least two target events are selected from the to-be-processed event set after the de-duplication processing.

Specifically, a to-be-processed event set is selected from the event library according to at least one of the event attention, the attention associated with the theme or the event number; then the to-be-processed events in the to-be-processed event set are de-duplicated according to the content of the to-be-processed events based on a de-duplication model, one of the repeated to-be-processed events is reserved, and then at least two target events are selected from the to-be-processed event set after the de-duplication processing.

It should be understood that the to-be-processed event set is de-duplicated, so that the subsequent target video may be determined more accurately, and thus the visual experience of the user is improved.

Further, as an optional implementation of the embodiment of the present disclosure, for each theme, a number of target videos that may be generated for the theme may be determined according to the event number under the theme, the event content length of the events, the standard video duration, and the like; and further, the events under the theme may be divided into groups according to the number of the target videos, and one target video is generated for each group of events.

Further, the target videos under the theme have an association relationship. For example, a last occurrence place of a first target video is a first occurrence place of a second target video, and the like.

FIG. 5 is a schematic structural diagram of a video generation apparatus according to an embodiment of the present disclosure. The apparatus is applicable to a case of how to introduce events, and is particularly applicable to a case of how to introduce the events based on a video form. The apparatus may be implemented in a software and/or hardware manner, and may be integrated into an electronic device carrying a video generation function. As shown in FIG. 5, the video generation apparatus 500 includes a place path planning module 501, a video sub-segment determination module 502 and a target video generation module 503. The place path planning module 501 is configured to plan a place path of at least two target events in an electronic map according to occurrence places of the at least two target events and occurrence time of the at least two target events, where the at least two target events have a same theme. The video sub-segment determination module 502 is configured to determine video sub-segments of the at least two target events respectively to obtain at least two video sub-segments. The target video generation module 503 is configured to generate a target video according to the at least two video sub-segments and the place path.

According to the technical schemes provided in the embodiment of the present disclosure, the place path of the at least two target events is planned in the electronic map according to the occurrence places and the occurrence time of the at least two target events, where the at least two target events have the same theme; then the video sub-segments of the at least two target events are respectively determined to obtain the at least two video sub-segments; and further, the target video is generated according to the at least two video sub-segments and the place path. According to the above technical schemes, the place path is introduced by combining the electronic map and according to the occurrence places and the occurrence time of the events, and a video of multiple events with a same theme is generated, which is equivalent to providing a way to introduce related events in a video form from a spatial perspective, so that different events with related themes may be reasonably and fully introduced, and it is convenient for the understanding of the readers.

Further, the place path planning module 501 includes a sorting unit and a place path planning unit. The sorting unit is configured to sort the occurrence places of the at least two target events according to the occurrence time of the at least two target events. The place path planning unit is configured to plan the place path of the at least two target events according to a sorting result and positions of the occurrence places in the electronic map.

Further, the place path planning unit is configured to: plan candidate place paths of the at least two target events according to the sorting result and the positions of the occurrence places in the electronic map; and select a target place path from the candidate place paths according to description information of the at least two target events.

Further, the place path planning module 501 further includes an incomplete place supplementary unit and a place path planning unit. The incomplete place supplementary unit is configured to in a case of identifying that at least one occurrence place of the occurrence places of the at least two target events is incomplete, supplement the at least one occurrence place that is incomplete according to a graph of points of interest. The place path planning unit is configured to plan the place path of the at least two target events in the electronic map according to the supplemented occurrence place and the occurrence time of the at least two target events.

Further, the video sub-segment determination module 502 is configured to: extract event attribute information of each target event of the at least two target events; and generate a video sub-segment of each target event according to the event attribute information of the each target event.

Further, the apparatus further includes a target event determination module. The target event determination module is configured to select at least two target events from an event library according to at least one of event attention, attention associated with the theme, or an event number.

Further, the target event determination module is configured to: select a to-be-processed event set from the event library according to the at least one of the event attention, the attention associated with the theme or the event number; and select at least two target events from the to-be-processed event set according to an event content length of to-be-processed events in the to-be-processed event set and a standard video duration.

Further, the target event determination module is further configured to: select a to-be-processed event set from the event library according to at least one of the event attention, the attention associated with the theme or the event number; perform de-duplication processing on the to-be-processed event set according to description information of to-be-processed events in the event set; and select at least two target events from the to-be-processed event set after the deduplication processing.

In the technical schemes of the present disclosure, the acquisition, storage and application of the involved events and video data and the like are in compliance with the provisions of relevant laws and regulations, and do not violate the common customs of public sequences.

According to the embodiments of the present disclosure, the present disclosure further provides an electronic device, a readable storage medium and a computer program product.

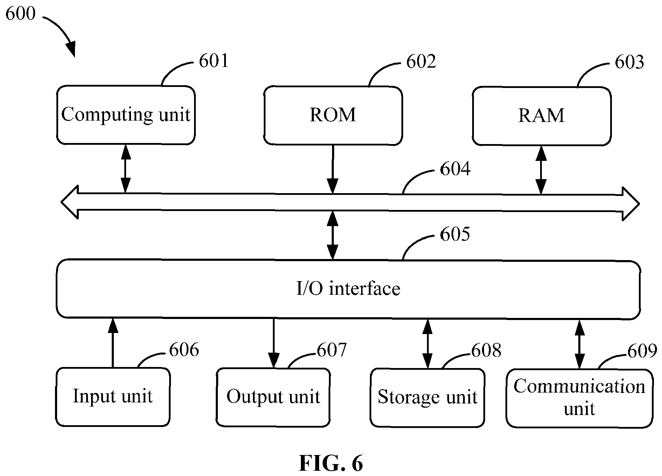

FIG. 6 shows a schematic block diagram of an exemplary electronic device 600 that may be used for implementing the embodiments of the present disclosure. The electronic device is intended to represent various forms of digital computers, such as laptops, desktops, workstations, personal digital assistants, servers, blade servers, mainframe computers, and other appropriate computers. The electronic device may also represent various forms of mobile devices, such as personal digital processing, cellphones, smartphones, wearable devices, and other similar computing devices. The components shown herein, their connections and relationships between these components, and the functions of these components, are illustrative only and are not intended to limit implementations of the present disclosure described and/or claimed herein.

As shown in FIG. 6, the electronic device 600 includes a computing unit 601, the computing unit 601 may perform various appropriate actions and processes according to a computer program stored in a read-only memory (ROM) 602 or a computer program loaded from a storage unit 608 into a random-access memory (RAM) 603. The RAM 603 may also store various programs and data required for the operation of the electronic device 600. The computing unit 601, the ROM 602, and the RAM 603 are connected to each other via a bus 604. An input/output (I/O) interface 605 is also connected to the bus 604.

Multiple components in the electronic device 600 are connected to the I/O interface 605, and the multiple components include an input unit 606 such as a keyboard or a mouse, an output unit 607 such as various types of displays or speakers, the storage unit 608 such as a magnetic disk or an optical disk, and a communication unit 609 such as a network card, a modem or a wireless communication transceiver. The communication unit 609 allows the electronic device 600 to exchange information/data with other devices over a computer network such as the Internet and/or various telecommunication networks.

The computing unit 601 may be a variety of general-purpose and/or dedicated processing assemblies having processing and computing capabilities. Some examples of the computing unit 601 include, but are not limited to, a central processing unit (CPU), a graphics processing unit (GPU), a special-purpose artificial intelligence (AI) computing chip, various computing units executing machine learning model algorithms, a digital signal processor (DSP) and any suitable processor, controller and microcontroller. The computing unit 601 performs the various methods and processes described above, such as the video generation method. For example, in some embodiments, the video generation method may be implemented as computer software programs tangibly embodied in a machine-readable medium, such as the storage unit 608. In some embodiments, part or all of computer programs may be loaded and/or installed on the electronic device 600 via the ROM 602 and/or the communication unit 609. When the computer program is loaded to the RAM 603 and executed by the computing unit 601, one or more steps of the video generation method described above may be executed. Alternatively, in other embodiments, the computing unit 601 may be configured, in any other suitable manners (e.g., by means of firmware), to perform the video generation method.

Various implementations of the systems and technologies described above herein may be achieved in digital electronic circuit systems, integrated circuit systems, field-programmable gate arrays (FPGAs), application-specific integrated circuits (ASICs), application-specific standard products (ASSPs), systems on chip (SOCs), complex programmable logic devices (CPLDs), computer hardware, firmware, software, and/or combinations thereof. These various implementations may include implementation in one or more computer programs, and the one or more computer programs are executable and/or interpretable on a programmable system including at least one programmable processor, the programmable processor may be a special-purpose or general-purpose programmable processor for receiving data and instructions from a memory system, at least one input device and at least one output device and transmitting data and instructions to the memory system, the at least one input device and the at least one output device.

Program codes for implementing the methods of the present disclosure may be written in any combination of one or more programming languages. These program codes may be provided for the processor or controller of a general-purpose computer, a special-purpose computer, or another programmable video generation apparatus to enable the functions/operations specified in a flowchart and/or a block diagram to be implemented when the program codes are executed by the processor or controller. The program codes may be executed entirely on a machine, partly on the machine, as a stand-alone software package, partly on the machine and partly on a remote machine, or entirely on the remote machine or server.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. More specific examples of the machine-readable storage medium may include an electrical connection based on one or more wires, a portable computer diskette, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination of the foregoing.

To provide the interaction with a user, the systems and technologies described here may be implemented on a computer. The computer has a display device (such as, a cathode-ray tube (CRT) or liquid-crystal display (LCD) monitor) for displaying information to the user; and a keyboard and a pointing device (such as, a mouse or a trackball) through which the user may provide input to the computer. Other kinds of devices may also be used for providing for interaction with the user; for example, feedback provided to the user may be sensory feedback in any form (such as, visual feedback, auditory feedback, or haptic feedback); and input from the user may be received in any form (including acoustic input, speech input, or haptic input).

The systems and technologies described here may be implemented in a computing system including a back-end component (such as, a data server), or a computing system including a middleware component (such as, an application server), or a computing system including a front-end component (such as, a client computer having a graphical user interface or a web browser through which the user may interact with the implementations of the systems and technologies described herein), or a computing system including any combination of such back-end component, middleware component, or front-end component. The components of the system may be interconnected by any form or medium of digital data communication (such as, a communication network). Examples of the communication network include a local area network (LAN), a wide area network (WAN) and the Internet.

The computer system may include a client and a server. The client and the server are generally remote from each other and typically interact through a communication network. The relationship of client and server arises by virtue of computer programs running on the respective computers and having a client-server relationship to each other. The server may be a cloud server, also referred to as a cloud computing server or a cloud host, and is a host product in a cloud computing service system, so that the defects of high management difficulty and weak service expansibility in the traditional physical host and virtual private server (VPS) service are overcome.

Artificial intelligence is the subject of research that causes the computer to simulate certain human mental processes and intelligent behaviors (such as learning, reasoning, thinking, planning, etc.), both at the hardware level and at the software level. Artificial intelligence hardware technologies generally include technologies such as sensors, dedicated artificial intelligence chips, cloud computing, distributed storage, big data processing; the artificial intelligence software technology mainly includes a computer vision technology, a voice recognition technology, a natural language processing technology, a machine leaming/deep learning technology, a big data processing technology, a knowledge graph technology and the like.

The cloud computing refers to accessing an elastically extensible shared physical or virtual resource pool through a network, where the resource may include a server, an operating system, network, a software, an application, a storage device, and the like, and may be a technical system that deploys and manages the resource in a self-service manner as needed. Through the cloud computing technology, high-efficiency and strong data processing capacity may be provided for technical applications such as artificial intelligence and blockchain, and a model training.

It should be understood that various forms of the flows shown above, reordering, adding or deleting steps may be used. For example, the steps described in the present disclosure may be executed in parallel, sequentially or in different orders as long as the desired result of the technical scheme provided in the present disclosure may be achieved. The execution sequence of these steps is not limited herein.

The above implementations should not be construed as limiting the protection scope of the present disclosure. It should be understood by those skilled in the art that various modifications, combinations, sub-combinations and substitutions may be made, depending on design requirements and other factors. Any modification, equivalent replacement, and improvement made within the spirit and principle of the present disclosure should be included within the protection scope of the present disclosure.

## Claims

1. A video generation method, **characterized by** comprising:
planning (S101) a place path of at least two target events in an electronic map according to occurrence places of the at least two target events and occurrence time of the at least two target events, wherein the at least two target events have a same theme;
determining (S102) video sub-segments of the at least two target events respectively to obtain at least two video sub-segments; and
generating (S103) a target video according to the at least two video sub-segments and the place path.

2. The method of claim 1, wherein planning (S101) the place path of the at least two target events in the electronic map according to the occurrence places of the at least two target events and the occurrence time of the at least two target events comprises:
sorting the occurrence places of the at least two target events according to the occurrence time of the at least two target events to obtain a sorting result; and
planning the place path of the at least two target events according to the sorting result and positions of the occurrence places in the electronic map.

3. The method of claim 2, wherein planning the place path of the at least two target events according to the sorting result and the positions of the occurrence places in the electronic map comprises:
planning candidate place paths of the at least two target events according to the sorting result and the positions of the occurrence places in the electronic map; and
selecting a target place path from the candidate place paths according to description information of the at least two target events.

4. The method of claim 1, wherein planning (S101) the place path of the at least two target events in the electronic map according to the occurrence places of the at least two target events and the occurrence time of the at least two target events comprises:
in a case of identifying that at least one occurrence place of the occurrence places of the at least two target events is incomplete, the at least one occurrence place is supplemented according to a graph of points of interest; and
planning the place path of the at least two target events in the electronic map according to the supplemented incomplete occurrence place and the occurrence time of the at least two target events.

5. The method of claim 1, wherein determining (S 102) the video sub-segments of the at least two target events respectively comprises:
extracting event attribute information of each target event of the at least two target events; and
generating a video sub-segment of each target event according to the event attribute information of the each target event.

6. The method of claim 1, before planning (S 101) a place path of at least two target events in an electronic map according to occurrence places of the at least two target events and occurrence time of the at least two target events, further comprising:
selecting the at least two target events from an event library according to at least one of event attention, attention associated with the theme, or an event number.

7. The method of claim 6, wherein selecting the at least two target events from the event library according to the at least one of the event attention, the attention associated with the theme, or the event number comprises:
selecting a to-be-processed event set from the event library according to the at least one of the event attention, the attention associated with the theme, or the event number; and
selecting the at least two target events from the to-be-processed event set according to an event content length of to-be-processed events in the to-be-processed event set and a standard video duration.

8. The method of claim 6, wherein selecting the at least two target events from the event library according to the at least one of the event attention, the attention associated with the theme, or the event number comprises:
selecting a to-be-processed event set from the event library according to the at least one of the event attention, the attention associated with the theme, or the event number;
performing de-duplication processing on the to-be-processed event set according to description information of to-be-processed events in the to-be-processed event set; and
selecting the at least two target events from the to-be-processed event set after the de-duplication processing.

9. A video generation apparatus (500), **characterized by** comprising:
a place path planning module (501), which is configured to plan a place path of at least two target events in an electronic map according to occurrence places of the at least two target events and occurrence time of the at least two target events, wherein the at least two target events have a same theme;
a video sub-segment determination module (502), which is configured to determine video sub-segments of the at least two target events respectively to obtain at least two video sub-segments; and
a target video generation module (503), which is configured to generate a target video according to the at least two video sub-segments and the place path.

10. The apparatus of claim 9, wherein the place path planning module (501) comprises:
a sorting unit, which is configured to sort the occurrence places of the at least two target events according to the occurrence time of the at least two target events to obtain a sorting result; and
a place path planning unit, which is configured to plan the place path of the at least two target events according to the sorting result and positions of the occurrence places in the electronic map.

11. The apparatus of claim 10, wherein the place path planning unit is configured to:
plan candidate place paths of the at least two target events according to the sorting result and the positions of the occurrence places in the electronic map; and
select a target place path from the candidate place paths according to description information of the at least two target events.

12. The apparatus of claim 9, wherein the place path planning module (501) further comprises:
an incomplete place supplementary unit, which is configured to in a case of identifying that at least one occurrence place of the occurrence places of the at least two target events is incomplete, supplement the at least one occurrence place according to a graph of points of interest; and
a place path planning unit, which is configured to plan the place path of the at least two target events in the electronic map according to the supplemented incomplete occurrence place and the occurrence time of the at least two target events.

13. An electronic device, **characterized by** comprising:
at least one processor; and
a memory communicatively connected to the at least one processor;
wherein the memory stores an instruction executable by the at least one processor, and the instructions, when executed by the at least one processor, causes the at least one processor to perform the video generation method of any one of claims 1 to 8.

14. A non-transitory computer-readable storage medium storing a computer instruction, **characterized in that** the computer instruction is configured to cause a computer to perform the video generation method of any one of claims 1 to 8.

15. A computer program product, **characterized by** comprising a computer program, wherein the computer program, when executed by a processor, implements the video generation method of any one of claims 1 to 8.
